Europäisches Patentamt

European Patent Office

Office européen des brevets

(19)

(11) Veröffentlichungsnummer : **0 104 510**
**B1**

(12) **EUROPÄISCHE PATENTSCHRIFT**

(45) Veröffentlichungstag der Patentschrift :
**12.11.86**

(21) Anmeldenummer : **83108746.5**

(22) Anmeldetag : **06.09.83**

(51) Int. Cl.⁴ : **A 01 F 15/00**

(54) **Ballenschiebevorrichtung für eine Rundballenpresse.**

(30) Priorität : **27.09.82 US 423757**

(43) Veröffentlichungstag der Anmeldung :
**04.04.84 Patentblatt 84/14**

(45) Bekanntmachung des Hinweises auf die Patenterteilung : **12.11.86 Patentblatt 86/46**

(84) Benannte Vertragsstaaten :
**DE FR GB IT**

(56) Entgegenhaltungen :
**EP-A- 0 076 502**
**US-A- 4 206 587**

(73) Patentinhaber : **DEERE & COMPANY**
**1 John Deere Road**
**Moline Illinois 61265 (US)**

(72) Erfinder : **Coeffic, Jean-Pierre**
**73 Faubourg Hinbebaire**
**F-54120 Baccarat (FR)**

(74) Vertreter : **Feldmann, Bernhard**
**DEERE & COMPANY European Office, Patent Depart-**
**ment Steubenstrasse 36-42 Postfach 503**
**D-6800 Mannheim 1 (DE)**

Jouve, 18, rue St-Denis, 75001 Paris, France

## Beschreibung

Die Erfindung betrifft eine Ballenschiebevorrichtung für eine Rundballenpresse mit einer vertikal schwenkbaren Auslaßklappe zum Auswerfen eines gebildeten Rundballens durch eine Austrittsöffnung und mit einem Rahmen, wobei die Ballenschiebevorrichtung als Ausleger ausgebildet, an dem Rahmen schwenkbar gelagert und in eine Stellung bringbar ist, in der der Ausleger an dem entladenen Rundballen in einem Abstand anliegt, der gewährleistet, daß die Auslaßklappe absenkbar ist, wobei die Auslaßklappe zum Auswerfen und der Ausleger zum Wegschieben des Rundballens gleichsinnig verschwenken.

Diese Ballenschiebevorrichtung (DE-U1-8 213 107) weist eine vorgespannte Feder auf, die an dem Bügel mit einem Abstand zu dessen an dem Rahmen gelegenen Schwenkpunkt angreift. Der Bügel liegt im Austrittsbereich des Rundballens aus einer von dem Rahmen und der Auslaßklappe gebildeten Ballenbildungskammer und wird in einer oberen Stellung von der Feder gehalten. Sobald die Auslaßklappe angehoben wird, damit der Rundballen aus der Ballenbildungskammer austreten kann, rollt der Rundballen über den Bügel auf den Boden, drückt dabei den Bügel an seinem freien Ende auf den Boden und spannt dabei die Feder. Sobald der Rundballen von dem Bügel abgerollt ist, wird der Bügel unter der Wirkung der Feder wieder nach oben mittels der Feder gezogen und verhindert durch seine Anlage an dem Rundballen, ungefähr in dessen vertikaler Mitte, daß er zurück unter die Auslaßklappe rollt. Nunmehr kann die Auslaßklappe abgesenkt und ein weiterer Ballenbildungsvorgang begonnen werden.

Dieser bekannten Ballenschiebevorrichtung haftet der Nachteil an, daß auf unebenem Gelände der Rundballen nicht vollkommen bis hinter die Ballenschiebevorrichtung rollt, so daß diese nicht in ihre obere Stellung schwenken und den Rundballen nicht in ausreichender Entfernung von der Auslaßklappe halten kann. Insbesondere im Betrieb hangabwärts kann es geschehen, daß beim Öffnen der Auslaßklappe ein bereits ausgeworfener Rundballen wieder auf die Ballenschiebevorrichtung aufrollt und das Austreten eines gerade gebildeten Rundballens nicht zuläßt. Außerdem steht die Ballenschiebevorrichtung nach hinten über die Rundballenpresse über, so daß sie beim Rückwärtsfahren beschädigt und dadurch funktionslos werden kann.

Die der Erfindung zugrunde liegende Aufgabe wird darin gesehen, die Ballenschiebevorrichtung derart zu verbessern, daß in zuverlässiger Weise ein Fortbewegen des ausgeworfenen Rundballens aus dem Schwenkbereich der Auslaßklappe erfolgt.

Diese Aufgabe ist erfindungsgemäß dadurch gelöst worden, daß der Ausleger zum Wegschieben des Rundballens von der Austrittsöffnung wegschwenkt.

Auf diese Weise wird der Rundballen auf jeden Fall außerhalb des Bewegungsbereiches der Auslaßklappe bewegt, und Bodenunebenheiten, eine Hanglage oder eine unrunde Form des Rundballens nehmen keine Einfluß darauf. Die Bewegung des Rundballens erfolgt vollkommen unabhängig von dem Rundballen. Auch in dem ungünstigen Fall, daß aufgrund des Arbeitens hangabwärts ein bereits ausgeworfener Rundballen auf den nun zu entladenden Rundballen aufrollt, wird der Freiraum unterhalb der Auslaßklappe freigehalten, da die Ballenschiebevorrichtung dann beide Rundballen wegrollt und sie in entsprechendem Abstand hält.

Durch die in den Unteransprüchen genannten Merkmale zur Fortentwicklung der Erfindung werden weitere Vorteile erzielt, wie sie aus den veröffentlichten Unterlagen zu diesem Patent hervorgehen.

In der Zeichnung ist ein nachfolgend näher beschriebenes Ausführungsbeispiel der Erfindung dargestellt. Es zeigt:

Figur 1 eine Rundballenpresse mit einer erfindungsgemäß ausgestalteten Ballenschiebevorrichtung,

Figur 2 die Rundballenpresse nach Fig. 1, jedoch mit einer hochgeschwenkten Auslaßklappe, wobei die Ballenschiebevorrichtung an einem Rundballen anliegt,

Figur 3 eine rückwärtige Ansicht der Rundballenpresse,

Figur 4 einen Hydraulikkreislauf der Rundballenpresse in schematischer Darstellung.

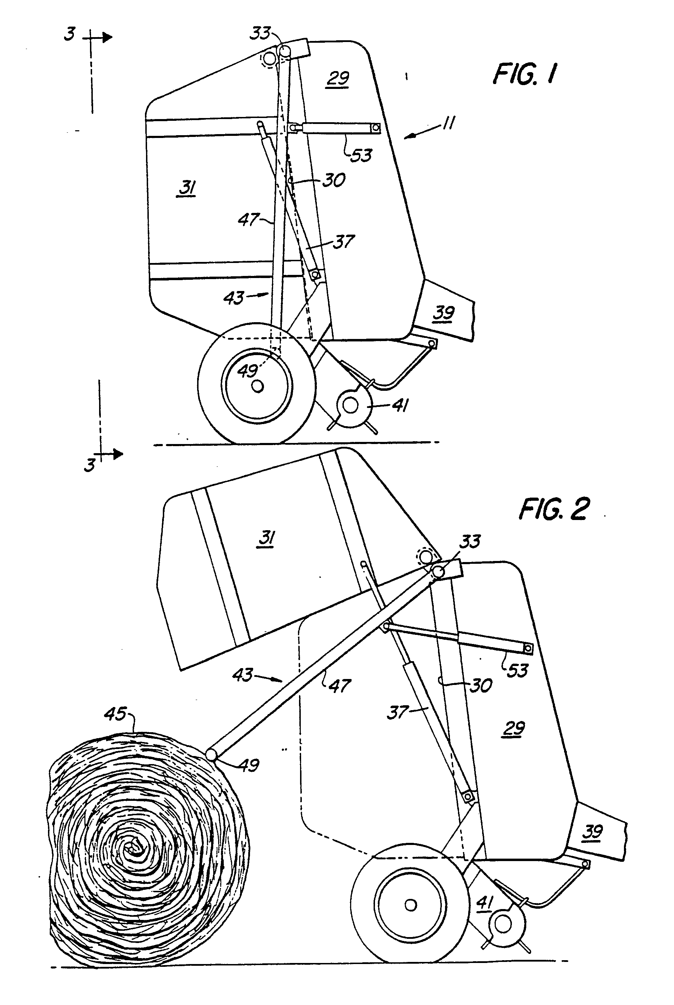

In den Figuren 1 bis 3 ist eine Rundballenpresse 11 dargestellt. Sie besteht im allgemeinen aus einem Paar sich gegenüberliegender Seitenwände 13, 15, einer Vielzahl sich längs erstreckender, nebeneinander gelegener, endloser Riemen 17 bis 24, die von vielen Walzen 25 bis 28, von denen nur einige dargestellt sind, getragen werden. Die Seitenwände 13 und 15, die Walzen 25 bis 28 und die endlosen Riemen 17 bis 24 umschließen eine in den Figuren nicht näher dargestellte Ballenbildungskammer. Die Anordnung der endlosen Riemen 17 bis 24 und der Walzen 25 bis 28 zum Bilden der Ballenbildungskammer ist in der europäischen Veröffentlichungsschrift mit der Nummer 0 076 502 beschrieben, weshalb im folgenden ihr Aufbau nur kurz erläutert wird.

Die Seitenwände 13 und 15 sowie die darin enthaltenen, wenn auch nicht dargestellten Komponenten sind einem Rahmenvorderteil 29 und einer Auslaßklappe 31 zugeordnet, wobei deren Trennstelle entlang einer Trennungslinie 30 verläuft. Die Auslaßklappe 31 ist um ein Gelenk 33 an dem Rahmenvorderteil 29 schwenkbar. Sie ist somit zwischen einer ersten Position oder Schließposition während des Bildens eines Rundballens 45 und einer offenen Position oder Entladeposition zum Auswerfen des Rundballens 45 mittels Hydraulikzylinder 35, 37 in Längsrichtung vor und zurück schwenkbar. Während des

Betriebs der Rundballenpresse 11 wird diese mittels eines nicht gezeigten Ackerschleppers, an den die Rundballenpresse 11 über eine Deichsel 39 angehängt ist, über das Feld gezogen. In einem Schwad auf dem Boden liegendes Heu oder Stroh wird von einem Erntegutaufnehmer 41 aufgenommen und der Ballenbildungskammer zugeführt. In dieser wird es in Form einer Spirale zu einem Rundballen 45 gerollt. Am Ende des Ballenbildungsvorgangs wird der Rundballen 45 mit Garn umschlungen und unter Beaufschlagung der Hydraulikzylinder 35, 37 zum Öffnen der Auslaßklappe 31 auf den Boden unterhalb der Auslaßklappe 31 ausgeworfen.

Die Rundballenpresse 11 ist weiterhin mit einem die Funktion einer Ballenschiebevorrichtung ausübenden Auswerfer 43 versehen, der von einer eingefahrenen oder ersten Stellung, wie sie in Fig. 1 dargestellt ist, und einer sich rückwärtig erstreckenden zweiten Stellung, wie sie in Fig. 2 gezeigt ist, bewegbar ist. Wenn der Rundballen 45 aus der Rundballenpresse 11 entladen worden ist, wird dieser Auswerfer 43 zunächst an den Rundballen herangeschwenkt oder kann bereits an diesem anliegen und bewegt ihn dann auf dem Weg in seine ausgefahrene Stellung in eine Endlage hinter der Rundballenpresse 11, die nicht im Schwenkbereich der Auslaßklappe 31 liegt. Der Auswerfer 43 wird von einem Paar Ausleger 46 und 47 und einer Drückstange 49 gebildet, wobei die Ausleger 46 und 47 einenends um das Gelenk 33 schwenkbar angelenkt sind und anderenends über die Drückstange 49 miteinander verbunden werden. Die Bewegung des Auswerfers 43 nach vorne bzw. hinten, d. h. zwischen der eingefahrenen in Fig. 1 gezeigten und der ausgefahrenen in Fig. 2 wiedergegebenen Stellung wird mittels Hydraulikzylinder 51 und 53 ausgeführt.

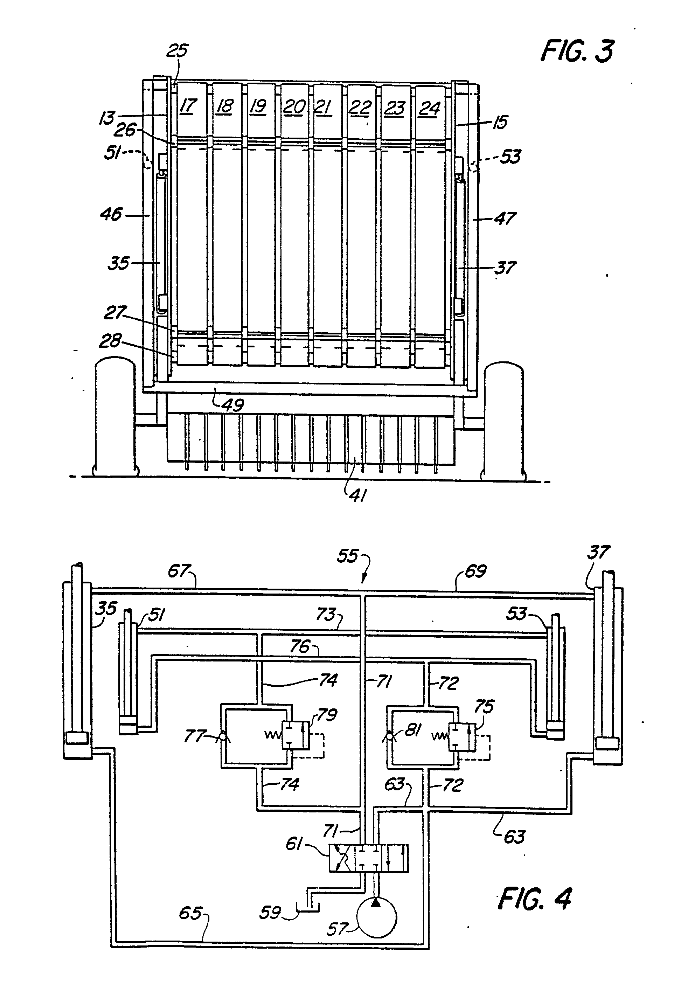

Des weiteren wird auf Fig. 4 Bezug genommen, die einen ersten Hydraulikkreislauf 55 zum Bedienen der der Auslaßklappe 31 zugeordneten Hydraulikzylinder 35 und 37 und der dem Auswerfer 43 zugeordneten Hydraulikzylinder 51 und 53 darstellt. Der Hydraulikkreislauf 55 kann von einem typischen Hydrauliksystem, beispielsweise dem des Ackerschleppers, der dazu benutzt wird, die Rundballenpresse 11 über das Feld zu ziehen, gespeist werden. Er beinhaltet eine Druckquelle 57, einen Vorratsbehälter 59 und ein Hauptsteuerventil 61. Die Hydraulikzylinder 35 und 37 für die Auslaßklappe 31 sind parallel geschaltet und zum Öffnen dieser Auslaßklappe 31 in eine ausgefahrene Stellung bringbar, wenn das Hauptsteuerventil 61 aus der in Fig. 4 gezeigten Neutralstellung nach links bewegt wird, um die Druckquelle 57 mit den unteren Enden der Hydraulikzylinder 35 und 37 über Leitungen 63 und 65 zu verbinden. Während des Ausfahrens der Hydraulikzylinder 35 und 37 wird Druckflüssigkeit von deren oberen Enden über Leitungen 67 und 69 und eine gemeinsame Leitung 71 wieder in den Vorratsbehälter 59 zurückgeführt.

Die dem Auswerfer 43 zugeordneten Hydraulikzylinder 51 und 53 sind ebenfalls parallel geschaltet und mit dem Hauptsteuerventil 61 und der Druckquelle 57 über ein druckgeregeltes Schaltventil 75 und Zuleitungen 72, 76 verbunden. Das Schaltventil 75 ermöglicht es der Druckflüssigkeit, zu den Hydraulikzylindern 51 und 53 zu fließen und diese in ihre ausgefahrene Position zu bringen, und zwar erst nachdem die Hydraulikzylinder 35 und 37 zum Öffnen der Auslaßklappe 31 voll ausgefahren worden sind. Das Nacheinanderschalten der Bedienung der Hydraulikzylinder 35 und 37 und der Hydraulikzylinder 51 und 53 zum Bewegen des Auswerfers 43 gewährleistet, daß die Hydraulikzylinder 51 und 53 erst dann ausgefahren werden, wenn die Auslaßklappe 31 von den Hydraulikzylindern 35 und 37 angehoben und der Rundballen 45 auf den Boden abgelegt worden ist. Von den oberen Enden der Hydraulikzylinder 51 und 53 zurückfließende Flüssigkeit wird dem Vorratsbehälter 59 über ein Rückschlagventil 77, Zuleitungen 73 und 74 und Leitung 71 zugeführt. Das obere Ende der Hydraulikzylinder 51 und 53 ist mit dem Hauptsteuerventil 61 und der Druckquelle 57 über ein druckgeregeltes Schaltventil 79, Leitung 71 und Zuleitungen 74 und 73 verbunden. Das Schaltventil 79 ermöglicht es der Druckflüssigkeit, die Hydraulikzylinder 51 und 53 einzufahren, um somit auch den Auswerfer 43 in seine eingefahrene Stellung zu bringen, aber erst dann, wenn die Hydraulikzylinder 35 und 37 vollkommen eingefahren sind und die Auslaßklappe 31 ihre die Ballenbildungskammer schließende Stellung einnimmt. Durch das Nacheinanderschalten des Einziehens zunächst der Hydraulikzylinder 35 und 37 zum Einfahren der Auslaßklappe 31 und danach des Einfahrens der den Auswerfer 43 verstellenden Hydraulikzylinder 51 und 53 ist sichergestellt, daß der Auswerfer 43 den Rundballen 45 in einer Position rückwärtig der Auslaßklappe 31 hält, bis diese wieder geschlossen ist. Es ist daher sicher, daß die Auslaßklappe 31 in allen Betriebsbedingungen geschlossen werden kann, ohne Gefahr zu laufen, daß sie den Rundballen 45 berührt, wenn sie sich aus ihrer öffnenden in ihre schließende Stellung bewegt. Dies ist besonders dann von großer Wichtigkeit, wenn an Neigungen oder Bodensenken der Rundballen 45 dazu tendiert, auf die Rundballenpresse 11 zuzurollen. Während des Einfahrens der Hydraulikzylinder 51 und 53 zurückfließende Flüssigkeit wird dem Vorratsbehälter 59 über ein Rückschlagventil 81, das zwischen dem unteren Ende der Hydraulikzylinder 51 und 53 und dem Hauptsteuerventil 61 angeordnet ist, über Zuleitungen 76, 72 und die Leitung 63 zugeführt. Die Zuleitungen 72, 73, 74 und 76 bilden also die Verbindungen für einen weiteren Hydraulikkreislauf, über den der Auswerfer gesteuert wird.

Entsprechend dem Vorbeschriebenen wird der Rundballen 45 nach seiner Bildung in der Ballenbildungskammer durch Öffnen der Auslaßklappe 31 unterhalb dieser auf den Boden abgelegt. Von dort wird er durch die Bewegung des Auswerfers 43 von seiner eingefahrenen Stellung in seine ausgefahrene Stellung weiter von der Rundballenpresse 11 weggerollt. Danach wird die Auslaßklappe 31 wieder in ihre schließende Position abgesenkt, während der Auswerfer 43 in seiner ausgefahrenen Stellung verharrt, um zu gewährleisten, daß der Rundballen 45 nicht wieder zu der Rundballenpresse 11 und somit unter die Auslaßklappe 31 zurückrollt. In einem solchen Falle, wie er bei bisherigen Rundballenpressen stets auftreten konnte, muß mit Beschädigungen an dieser gerechnet werden. Sobald sich die Auslaßklappe 31 jedoch in ihrer die Ballenbildungskammer schließenden Position befindet, wird auch der Auswerfer 43 von seiner ausgefahrenen in seine eingefahrene Stellung bewegt.

Der vorbeschriebene Bewegungsablauf zum Entladen des Rundballens 45 aus der Rundballenpresse 11 wird nun in Verbindung mit dem Hydraulikkreislauf 55 aus Fig. 4 geschildert. Nach dem Bilden und Binden des Rundballens 45 mit Garn wird die Auslaßklappe 31 von den Hydraulikzylindern 35 und 37 angehoben, was dadurch bewirkt wird, daß das Hauptsteuerventil 61 nach links bewegt und somit die Druckquelle 57 mit dem unteren Ende der Hydraulikzylinder 35, 37 verbunden wird. Während des Ausfahrens der Hydraulikzylinder 35 und 37 zum Öffnen der Auslaßklappe 31 gelangt zurückfließende Flüssigkeit über die Leitungen 67, 69 und 71 zu dem Vorratsbehälter 59. Sobald die Hydraulikzylinder 35 und 37 vollkommen ausgefahren sind, steht an dem Schaltventil 75 ein Druck an, der ausreichend ist, um dieses zu verschieben und die Druckmittelzufuhr von der Druckquelle 57 zu dem jeweils unteren Ende der Hydraulikzylinder 51 und 53 zu ermöglichen, was deren Ausfahren und somit auch ein Bewegen des Auswerfers 43 von seiner eingefahrenen in seine ausgefahrene Stellung hervorruft. Während die Hydraulikzylinder 51 und 53 ausgefahren werden, fließt an deren jeweils anderen Ende drucklose Flüssigkeit über die Zuleitungen 73 und 74 und das Rückschlagventil 77 dem Vorratsbehälter 59 zu. Nachdem auch der Auswerfer 43 vollkommen ausgefahren ist, um den Rundballen 45 von unterhalb der Auslaßklappe 31 wegzurollen, wird letztere durch die Verschiebung des Hauptsteuerventils 61 in Fig. 4 nach rechts in ihre schließende Position gebracht. In dieser Stellung des Hauptsteuerventils 61 kann die Druckquelle 57 das obere Ende der Hydraulikzylinder 35 und 37 mit Druckflüssigkeit beaufschlagen, um diese und somit auch die Auslaßklappe 31 einzufahren. Während des Einfahrens der Hydraulikzylinder 35 und 37 gelangt von deren unteren Enden zurückfließende Flüssigkeit über die Leitungen 63 und 65 zu dem Vorratsbehälter 59. Dem vollkommenen Einfahren der Hydraulikzylinder 35 und 37 folgt ein ausreichend großer Druckanstieg an dem Schaltventil 79, um die Druckquelle 57 mit dem oberen Ende der dem Auswerfer 43 zugeordneten Hydraulikzylinder 51 und 53 zu verbinden. Somit werden die Hydraulikzylinder 51 und 53 eingefahren, und der Auswerfer 43 kehrt in seine eingefahrene Stellung zurück.

Dem Vorbeschriebenen kann entnommen werden, daß der Auswerfer 43 den Rundballen 45 zuverlässig aus dem Schwenkbereich der Auslaßklappe 31 herausrollt. Der Rundballen 45 wird also stets, d. h. bei Vorhandensein von unebenem Gelände, beim Zurückstoßen der Rundballenpresse 11, beispielsweise beim Wenden, oder bei Neigungen, in einem erforderlichen Abstand zu der Rundballenpresse 11 gehalten. Die aufeinanderfolgende Steuerung der Bewegung des Auswerfers 43 in Abhängigkeit von der Auslaßklappe 31 führt zu einer einfachen Bedienungsweise der Rundballenpresse 11, die auch von weniger geübten Fahrern angewendet werden kann. Der Betrieb der Rundballenpresse 11 wird unter Verwendung dieses erfindungsgemäßen Auswerfers 43 weitaus sicherer, und Schäden an ihr, die durch Absenken der Auslaßklappe 31, während sich der Rundballen 45 noch unterhalb dieser befindet, entstehen, werden vermieden.

**Patentansprüche**

1. Ballenschiebevorrichtung (43) für eine Rundballenpresse (11) mit einer vertikal schwenkbaren Auslaßklappe (31) zum Auswerfen eines gebildeten Rundballens (45) durch eine Austrittsöffnung und mit einem Rahmen (29), wobei die Ballenschiebevorrichtung (43) als Ausleger (46, 47) ausgebildet, an dem Rahmen (29) schwenkbar gelagert und in eine Stellung bringbar ist, in der der Ausleger (46, 47) an dem entladenen Rundballen (45) in einem Abstand anliegt, der gewährleistet, daß die Auslaßklappe (31) absenkbar ist, wobei die Auslaßklappe (31) zum Auswerfen und der Ausleger (46, 47) zum Wegschieben des Rundballens gleichsinnig verschwenken, dadurch gekennzeichnet, daß der Ausleger (46, 47) zum Wegschieben des Rundballens (45) von der Austrittsöffnung wegschwenkt.

2. Ballenschiebevorrichtung nach Anspruch 1, dadurch gekennzeichnet, daß eine Steuerung der Bewegung des Auslegers (46, 47) vorgesehen ist, derart, daß der Ausleger (46, 47) in eine dem Rahmen (29) abgelegene und den Rundballen (45) im Abstand zu der Auslaßklappe (31) haltende Stellung bringbar ist, nachdem die Auslaßklappe (31) ihre angehobene Stellung eingenommen hat, und so lange in dieser verharrt, bis die Auslaßklappe (31) vollkommen abgesenkt ist.

3. Ballenschiebevorrichtung nach Anspruch 1, dadurch gekennzeichnet, daß der Ausleger (46, 47) mittels mindestens eines Hydraulikzylinders (51, 53) verschwenkbar ist, daß die Auslaßklappe (31) wie an sich bekannt mittels Hydraulikzylindern (35, 37) verschwenkt wird und daß die Hydraulikzylinder (35, 37) der Auslaßklappe (31) und der Hydraulikzylinder (51, 53) der Ballenschiebevorrichtung (43) zeitverzögert nacheinander betätigt werden.

4. Ballenschiebevorrichtung nach Anspruch 3, dadurch gekennzeichnet, daß in einem Hydraulikkreis zum Betätigen der Hydraulikzylinder (35, 37) der Auslaßklappe (31) pilotgesteuerte Hydraulikventile (75, 79) vorgesehen sind, die nach Erreichen eines in den Hydraulikzylindern (35, 37) der Auslaßklappe (31) herrschenden Mindestdruckes einen Druckmittelfluß zu dem Hydraulikzylinder (51, 53) des Auslegers (46, 47) freigeben.

5. Ballenschiebevorrichtung nach einem oder mehreren der vorherigen Ansprüche, dadurch gekennzeichnet, daß die pilotgesteuerten Schaltventile (75, 79) entgegen der Wirkung einer Feder aus einer Sperrstellung in eine den Zulauf zu den weiteren Hydraulikzylindern (51, 53) ermöglichende Stellung über den Pilotdruck verstellbar sind.

6. Ballenschiebevorrichtung nach einem oder mehreren der vorherigen Ansprüche, dadurch gekennzeichnet, daß der Hydraulikkreislauf (55) Leitungen (63, 65, 67, 69, 71) aufweist, denen Druckmittel aus einem Vorratsbehälter (59) über eine Druckquelle (57) eingespeist wird, daß die zu den Endseiten des Hydraulikzylinders (35, 37) für die Auslaßklappe (31) führenden Leitungen (63, 65, 67, 69, 71) wechselseitig über ein Hauptsteuerventil (61) mit der Druckquelle (57) oder dem Vorratsbehälter (59) verbindbar sind und in dem Bereich zwischen dem Hauptsteuerventil (61) und dem Hydraulikzylinder (35, 37) an die Leitungen (63, 71) je ein pilotgesteuertes Schaltventil (75, 79) angeschlossen ist, von denen eins anderenends über eine Zuleitung mit dem einen Ende des weiteren Hydraulikzylinders und das andere über eine weitere Zuleitung mit dem anderen Ende des weiteren Hydraulikzylinders verbunden ist, wobei im Bereich der pilotgesteuerten Schaltventile (75, 79) je eine ein Rückschlagventil (77, 81) aufweisende Umgehungsleitung vorgesehen ist.

## Claims

1. Bale push-off system (43) for a round baler (11) with a vertically swingable discharge flap (31) for ejecting a formed round bale (45) through an exit opening and with a frame (29), the bale push-off system (43) being in the form of an outrigger (46, 47), swingably mounted on the frame (29) and capable of being brought into a position in which the outrigger (46, 47) bears against the unloaded round bale (45) at a distance away which ensures that the discharge flap (31) can be lowered, the discharge flap (31) and the outrigger (46, 47) swinging in the same direction for ejecting the round bale and pushing it away, respectively, characterised in that the outrigger (46, 47) swings away from the exit opening for pushing the round bale (45) away.

2. Bale push-off system according to claim 1, characterised in that control of the movement of the outrigger (46, 47) is provided in such manner that after the discharge flap (31) has adopted its raised position the outrigger (46, 47) can be brought into a position remote from the frame (29) and holding the round bale (45) at a distance from the discharge flap (31) and remains in this position until the discharge flap (31) has been fully lowered.

3. Bale push-off system according to claim 1, characterised in that the outrigger (46, 47) is swingable by means of at least one hydraulic cylinder (51, 53), the discharge flap (31) is swung as known per se by means of hydraulic cylinders (35, 37) and the hydraulic cylinders (35, 37) of the discharge flap (31) and the hydraulic cylinders (51, 53) of the bale push-off system (43) are actuated in succession with a time delay.

4. Bale push-off system according to claim 3, characterised in that pilot-pressure-controlled hydraulic valves (75, 79) are provided in a hydraulic circuit for actuating the hydraulic cylinders (35, 37) of the discharge flap (31) and, after a minimum pressure prevailing in the hydraulic cylinders (35, 37) of the discharge flap (31) has been reached, release a flow of pressure medium to the hydraulic cylinders (51, 53) of the outrigger (46, 47).

5. Bale push-off system according to one or more of the preceding claims, characterised in that the pilot-pressure-controlled actuating valves (75, 79) are adjustable in opposition to the action of a spring from a blocking position into a position enabling the flow to the further hydraulic cylinders (51, 53) by way of the pilot pressure.

6. Bale push-off system according to one or more of the preceding claims, characterised in that the hydraulic circuit (55) comprises lines (63, 65, 67, 69, 71) to which pressure medium is fed from a supply reservoir (59) by way of a pressure source (57) and the lines (63, 65, 67, 69, 71) leading to the ends of the hydraulic cylinders (35, 37) for the discharge flap (31) can be connected alternately by way of a main control valve (61) to the pressure source (57) or to the supply reservoir (59), and in the zone between the main control valve (61), and the hydraulic cylinders (35, 37) a pilot-pressure-controlled actuating valve (75, 79) is connected to each of the lines (63, 71), one of which actuating valve is connected at the other end by way of a feed line to one end of the further hydraulic cylinder and the other is connected by way of a further feed line to the other end of the further hydraulic cylinder, a by-pass line having a non-return valve (77, 81) being provided in the zone of each of the pilot-pressure-controlled actuating valves (75, 79).

## Revendications

1. Dispositif (43) pour déplacer ou repousser les balles, pour presse à balles rondes (11) comportant une porte d'évacuation (31) pouvant pivoter verticalement pour l'éjection d'une balle ronde formée (45) à travers un orifice de sortie, et un châssis (29), le dispositif (43) pour repousser les balles se présentant sous la forme d'un bras (46, 47), étant monté de façon pivotante sur le châssis (29) et pouvant être amené dans une position dans laquelle le bras (46, 47) s'applique sur la balle ronde déchargée (45) à une distance fournissant la certitude que la porte d'évacuation

(31) peut être rabattue, la porte d'évacuation (31) servant à l'éjection et le bras (46, 47) servant à repousser la balle ronde pivotant dans le même sens, caractérisé en ce que le bras (46, 47) servant à repousser la balle ronde (45) pivote en s'écartant de l'orifice de sortie.

2. Dispositif pour repousser les balles suivant la revendication 1, caractérisé en ce qu'il est prévu une commande du mouvement du bras (46, 47) de façon telle que le bras (46, 47) puisse être amené dans une position écartée du châssis (29) et maintenant la balle ronde (45) à l'écart de la porte d'évacuation (31) après que la porte d'évacuation (31) est venue occuper sa position relevée, et demeure dans cette position jusqu'à ce que la porte d'évacuation (31) soit complètement abaissée.

3. Dispositif pour repousser les balles suivant la revendication 1, caractérisé en ce que le bras (46, 47) peut être déplacé par pivotement au moyen d'au moins un cylindre hydraulique (51, 53), en ce que la porte d'évacuation (31) est déplacée par pivotement de manière connue au moyen de cylindres hydrauliques (35, 37), et en ce que les cylindres hydrauliques (35, 37) de la porte d'évacuation (31) et le cylindre hydraulique (51, 53) du dispositif pour repousser les balles (43) sont actionnés l'un après l'autre avec un certain décalage ou retard dans le temps.

4. Dispositif pour repousser les balles suivant la revendication 3, caractérisé en ce qu'il est prévu, dans un circuit hydraulique pour l'actionnement des cylindres hydrauliques (35, 37) de la porte d'évacuation (31), des valves hydrauliques pilotées (75, 79) qui, lorsqu'une pression minimale est atteinte dans les cylindres hydrauliques (35, 37) de la porte d'évacuation (31), permettent un écoulement de fluide sous pression en direction du cylindre hydraulique (51, 53) du bras (46, 47).

5. Dispositif pour repousser les balles suivant une ou plusieurs des revendications précédentes, caractérisé en ce que les valves de commutation pilotées (75, 79) sont déplaçables en antagonisme à l'action d'un ressort d'une position de blocage jusque dans une position permettant l'alimentation des autres cylindres hydrauliques (51, 53), sous l'effet de la pression pilote.

6. Dispositif pour repousser les balles suivant une ou plusieurs des revendications précédentes, caractérisé en ce que le circuit hydraulique (55) comporte des conduits (63, 65, 67, 69, 71) qui sont alimentés en fluide sous pression à partir d'un réservoir (59) par l'intermédiaire d'une source de pression (57), en ce que les conduits (63, 65, 67, 69, 71) aboutissant aux extrémités du cylindre hydraulique (35, 37) de la porte d'évacuation (31) peuvent être mis sélectivement en communication par une valve de commande principale (61) avec la source de pression (57) ou avec le réservoir (59), et en ce qu'une valve de commutation pilotée (75, 79) est raccordée chaque fois aux conduits (63, 71) dans la zone comprise entre la valve de commande principale (61) et le cylindre hydraulique (35, 37), l'une de ces valves de commutation étant reliée par son autre extrémité, par l'intermédiaire d'un conduit d'admission, à une extrémité de l'autre cylindre hydraulique, tandis que l'autre valve de commutation est reliée par un autre conduit d'admission à l'autre extrémité de cet autre cylindre hydraulique, un conduit en dérivation comportant un clapet anti-retour (77, 81) étant prévu chaque fois dans la zone des valves de commutation pilotées (75, 79).

FIG. 1

FIG. 2

FIG. 3

FIG. 4